# FASCICULE DE BREVET EUROPEEN

(11) **EP 2 594 817 B1**
(45) Date de publication et mention de la délivrance du brevet: **04.03.2015**
(21) Numéro de dépôt: 12305917.2
(22) Date de dépôt: 27.07.2012
(51) Int. Cl.: F16D 1/076, F16D 1/116, F16D 1/112, H02B 1/46

(54) **Dispositif de positionnement axial d'une bielle par rapport à son arbre d'entraînement, et dispositif d'interverrouillage de porte dans une cellule comportant un tel dispositif**
Vorrichtung zur axialen Positionierung einer Pleuelstange bezüglich ihrer Antriebswelle, und Sicherheitszuhaltung der Tür in einer Zelle, die eine solche Vorrichtung umfasst
Device for axial positioning of a rod with respect to its drive shaft, and door interlock device in a cubicle comprising one such device

(30) Priorité: 17.11.2011 FR 1103493
(43) Date de publication de la demande: 22.05.2013
(73) Titulaire: Schneider Electric Industries SAS, 92500 Rueil-Malmaison (FR)
(72) Inventeur: Terpend, Serge, 38050 GRENOBLE Cedex 09 (FR); Maquet, Patrick, 38050 GRENOBLE Cedex 09 (FR)
(74) Mandataire: Colette, Marie-Françoise

(56) Documents cités:
- WO-A1-00/46518
- AU-B2- 469 175
- DE-U1- 9 401 733

## Description

La présente invention concerne un dispositif de positionnement axial d'une bielle par rapport à son arbre d'entraînement, ladite bielle comportant à l'une de ses extrémités une ouverture par laquelle ladite bielle est destinée à être montée autour d'une extrémité dite première de l'arbre.

Ce positionnement axial d'une bielle sur un arbre est réalisé de manière habituelle au moyen d'un épaulement réalisé sur l'arbre coopérant avec un système de maintien comportant un système vis/écrou ou bien une rondelle élastique.
Cette manière de réaliser ce positionnement présente un coût élevé tenant principalement aux usinages supplémentaires nécessaires, aux pièces supplémentaires nécessaires et aux temps de montage plus longs.
Cette solution présente également des risques importants de mauvais montage, de perdre des pièces à l'intérieur du mécanisme, de desserrage et également l'obligation d'utiliser des outils spéciaux afin de mettre en place l'anneau élastique, ou bien d'une clé dynamométrique pour visser la vis.
En outre, le système avec vis donne un couple de rotation à l'arbre au moment du serrage, ce couple pouvant être un inconvénient.
Un autre montage possible si la largeur de la bielle le permet consiste à insérer une vis pointeau sur la bielle et de faire pénétrer la pointe de la vis dans l'arbre. Cette solution présente un coût d'usinage et de montage élevés. En outre, le risque de desserrage est important si les efforts sont élevés et surtout s'il y a des chocs au moment du fonctionnement du mécanisme.

On connaît également le document AU 469 175 décrivant les caractéristiques du préambule de la revendication 1.

La présente invention résout ces problèmes et propose un dispositif de positionnement axial d'une bielle par rapport à son arbre d'entraînement, de conception simple, présentant un nombre de pièces réduit au minimum et dont le montage est très simple et rapide et ne nécessitant pas d'outillage.

A cet effet, la présente invention a pour objet un dispositif de positionnement axial d'une bielle par rapport à son arbre d'entraînement, ce dispositif étant caractérisé en ce qu'il comporte des moyens de blocage en rotation de la bielle par rapport à l'arbre précité, ces moyens de blocage comportant des éléments prévus sur la bielle coopérant avec des éléments de forme complémentaire prévus sur l'arbre, et des moyens de blocage en rotation de la pièce intermédiaire par rapport à l'arbre précité prévus en partie sur la pièce intermédiaire et en partie sur l'arbre, ces moyens de blocage en rotation de la bielle par rapport à l'arbre comportant des nervures prévues sur la surface délimitant l'ouverture de la bielle, lesdites nervures coopérant avec des cannelures correspondantes prévues sur l'arbre.

Selon une caractéristique particulière, la pièce précitée est réalisée dans un matériau plastique.

Selon une autre caractéristique, la partie tubulaire précitée comporte au moins une échancrure s'étendant sensiblement parallèlement à la direction longitudinale de la partie tubulaire et destinée à faciliter le déplacement de la partie tubulaire le long de l'arbre lors du montage de la pièce sur ledit arbre.

Selon une autre caractéristique, la seconde partie de la pièce comporte une ouverture de forme sensiblement tubulaire destinée à permettre l'introduction de l'extrémité dite première de la bielle, ladite ouverture étant délimitée par une paroi comportant plusieurs pattes s'étendant en direction du centre de l'ouverture, lesdites pattes étant aptes à être déformées élastiquement de manière à permettre le passage de la bielle d'un côté à l'autre desdites pattes lors de son montage sur l'extrémité de l'arbre, jusqu'à la mise en appui de la bielle sur une surface d'appui de la première partie de la pièce intermédiaire, position dans laquelle ladite bielle est retenue entre les pattes formant clips précités de la pièce intermédiaire et la surface d'appui précitée de la pièce intermédiaire.

Selon une autre caractéristique, les pattes sont au nombre de trois et forment trois clips.

Selon une autre caractéristique, ce dispositif comporte des moyens de blocage en rotation de la bielle par rapport à l'arbre précité.

Selon une autre caractéristique, ce dispositif comporte des moyens de blocage en rotation de la pièce intermédiaire par rapport à l'arbre précité.

Selon une caractéristique particulière, ces moyens comportent des nervures prévues sur la surface intérieure de la partie tubulaire de la première partie de la pièce intermédiaire, lesdites nervures coopérant avec des cannelures correspondantes prévues sur l'arbre.

Selon une autre caractéristique, les moyens d'encliquetage précités comportent des crochets prévus sur la première partie de la pièce intermédiaire coopérant avec une rainure circulaire prévue sur l'arbre.

Selon une caractéristique particulière, la paroi délimitant l'ouverture tubulaire de la seconde partie de la pièce comporte, au niveau des pattes, des parties formant rampe aptes à faciliter le passage de la bielle d'un côté à l'autre des pattes formant cliquets.

La présente invention a encore pour objet un dispositif d'inter-verrouillage destiné à sécuriser l'accès à la boîte à câbles d'une cellule électrique haute ou moyenne tension, ladite cellule comprenant un appareil de coupure électrique en série avec des moyens de mise à la terre des câbles commandés par un arbre de mise à la terre, ladite cellule étant reliée en amont à un réseau d'alimentation électrique et en aval à au moins un câbles, le ou les câbles étant logés dans une boîte à câbles fermée par une porte, ledit dispositif comportant des moyens pour autoriser l'ouverture de la porte de la boîte à câbles uniquement si la mise à la terre des câbles est réalisée, et des moyens pour autoriser la remise en ligne des moyens de mise à la terre lorsque la porte est ouverte mais interdire la fermeture de l'appareil de coupure lorsque ladite porte est ouverte, ledit dispositif comportant un boîtier logeant un verrou, ledit verrou coopérant d'une part avec la porte et d'autre part, avec une tringle de verrouillage comportant une bielle montée autour de l'arbre de mise à la terre, ce dispositif étant **caractérisé en ce que** la bielle précitée est positionnée par rapport à l'arbre précité au moyen d'un dispositif de positionnement comportant les caractéristiques prises séparément ou en combinaison.

Selon une autre caractéristique, la pièce intermédiaire du dispositif de positionnement forme également un voyant mécanique coopérant avec une ouverture prévue dans la face avant de la cellule de manière à donner la position de l'arbre de mise à la terre.

Selon une autre caractéristique, la pièce intermédiaire du dispositif de positionnement a également pour fonction d'actionner des micro-rupteurs.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue en perspective, illustrant un arbre de commande d'une bielle,
- La figure 2 est une vue en perspective, illustrant cette bielle reliée à un verrou de porte, ces éléments étant destinés à être utilisés dans un dispositif d'inter-verrouillage de porte dans une cellule moyenne tension,
- La figure 3 est une vue en perspective, d'une pièce intermédiaire faisant partie du dispositif de positionnement axial de la bielle par rapport à son arbre d'entraînement selon l'invention,
- La figure 4 est une vue partielle en perspective, illustrant le montage de la bielle sur l'arbre,
- La figure 5 est une vue partielle en perspective, illustrant le dispositif de positionnement selon l'invention en position de service,
- Les figures 6 et 7 sont deux vues partielles en perspective illustrant la mise en oeuvre du dispositif selon l'invention dans un dispositif d'inter-verrouillage de porte dans une cellule électrique moyenne tension, respectivement pour les deux figures, avant le montage de la bielle équipée de son verrou, et après le montage de la bielle, et
- La figure 8 est une vue partielle en perspective illustrant le dispositif selon l'invention en position de service dans une cellule moyenne tension,

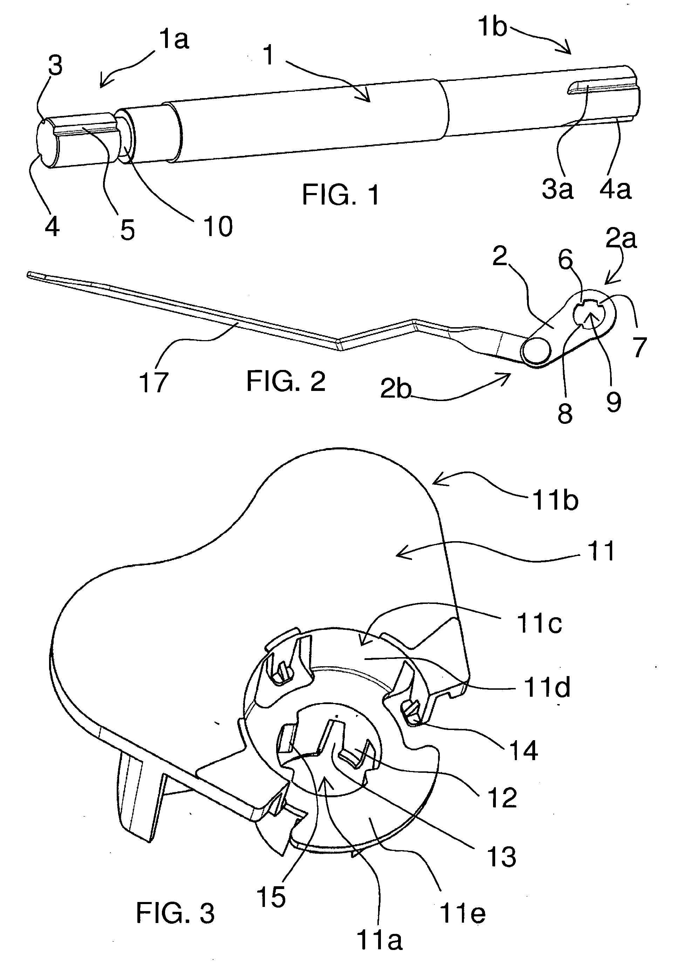

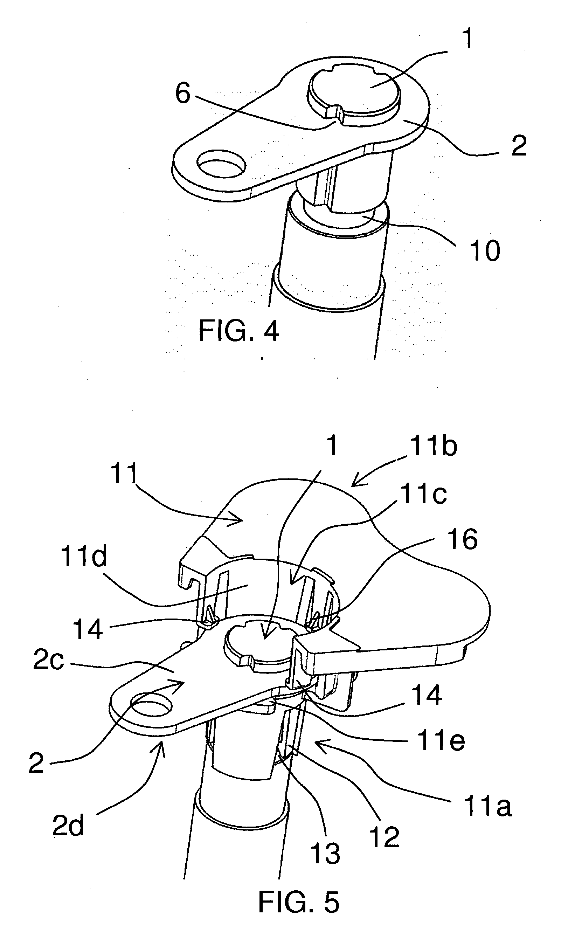

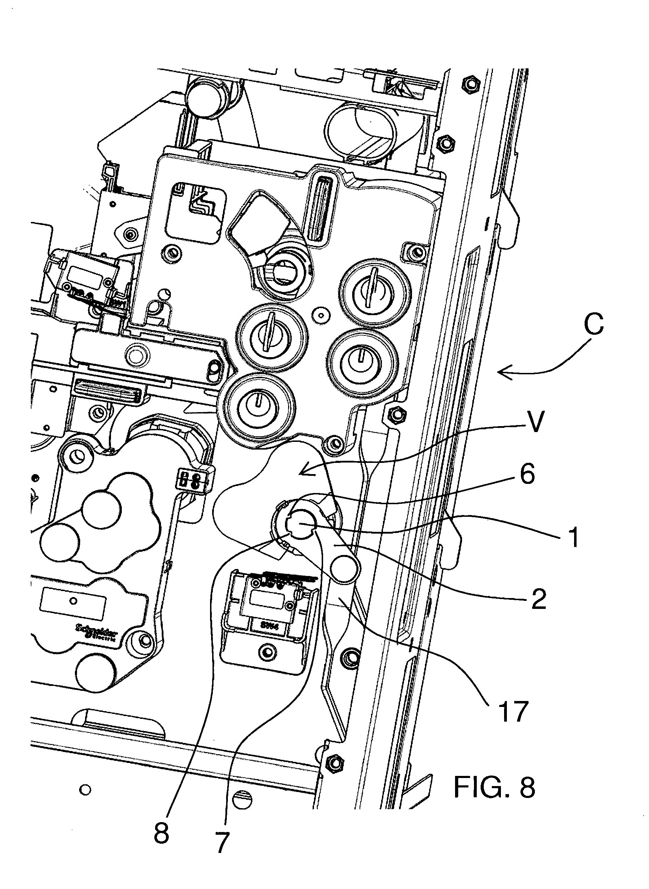

Sur la figure 1 est représenté un arbre 1 d'entraînement d'une bielle 2, tel que l'arbre destiné à commander le dispositif de mise à la terre dans une cellule électrique moyenne ou haute tension.
Cet arbre 1 comporte, à chacune de ses extrémités 1a, 1b, un ensemble de plusieurs cannelures 3,4,5 et 3a,4a s'étendant sur une partie de sa longueur sensiblement parallèlement à son axe longitudinal. Ces cannelures sont au nombre de trois à chaque extrémité, dans cette réalisation particulière de l'invention. A l'une 1a des extrémités de l'arbre, dite première, ces cannelures 3,4,5 sont destinées à coopérer avec un même nombre de nervures 6,7,8 situées dans un orifice circulaire 9 prévu dans une extrémité dite première 2a d'une bielle 2 telle que celle illustrée sur la figure 2.
A cette même extrémité 1a, cet arbre 1 comporte également un évidement annulaire 10 destiné à coopérer avec une pièce intermédiaire 11 faisant partie du dispositif selon une réalisation particulière de l'invention, laquelle pièce 11 est illustrée sur la figure 3, comme ceci sera expliqué dans ce qui suit.
Tel qu'illustré sur la figure 2, cette bielle 2 comporte à sa première extrémité 2a l'ouverture circulaire précitée 9, laquelle ouverture 9 comporte les nervures précitées 6,7,8 par laquelle ladite bielle est destinée à être montée sur l'extrémité dite première 1a de l'arbre 1, les nervures précitées 6,7,8 étant destinées à coopérer avec les cannelures précitées 3,4,5 dudit arbre 1 de façon à réaliser la solidarisation en rotation de l'arbre 1 et de la bielle 2, tel qu'illustré sur la figure 4. A son extrémité opposée 2b, la bielle 2 est reliée de manière articulée à une autre bielle dite bielle plate 17 elle-même reliée mécaniquement à un verrou non représenté destiné à coopérer avec une porte, cette porte étant dans cette réalisation particulière décrite, celle d'une boîte à câbles dans une cellule moyenne tension, comme ceci sera expliqué plus en détail dans ce qui suit.
Sur la figure 3 est représentée la pièce intermédiaire précitée 11, laquelle est réalisée de préférence en un matériau plastique tel que par exemple le polycarbonate de manière à présenter une certaine souplesse au moins sur certaines de ses parties.
Cette pièce 11 comporte une première partie 11 a présentant une forme tubulaire destinée à être montée autour de l'extrémité dite première 1a de l'arbre précité 1 et comportant des moyens d'encliquetage 12 destinés à coopérer avec l'évidement précité 10 de l'arbre, et une seconde partie 11b comportant une ouverture de forme sensiblement tubulaire 11c destinée à recevoir et permettre le passage de l' extrémité dite première 2a de la bielle, cette seconde partie comportant des moyens de retenue formant clip 14 de la bielle 2 sur l'arbre 1, comme ceci sera expliqué dans ce qui suit. Selon cette réalisation particulière, cette seconde partie 11 b comporte également une partie formant un voyant V destiné à indiquer la position de l'arbre et dans cette réalisation décrite, de l'arbre du dispositif de mise à la terre. Ces moyens d'encliquetage 12 sont formés par des éléments formant crochet situés à l'extrémité libre de la partie tubulaire précitée 11a, laquelle partie tubulaire présente des échancrures 13 s'étendant sensiblement parallèlement à la direction longitudinale de la partie tubulaire 11a et destinés à conférer à cette partie tubulaire une certaine élasticité permettant aux éléments formant crochet 12 d'être déplacés le long de la partie d'extrémité de l'arbre 1 lors du montage de la pièce en direction de l'évidement annulaire 10, dans lequel les éléments formant crochet sont rappelés élastiquement de manière à réaliser l'encliquetage précité assurant la solidarisation axiale de la pièce intermédiaire 11 et de l'arbre 1.
La seconde partie 11b de la pièce 11 comporte des pattes formant clip 14, de préférence au nombre de trois, faisant saillie de la paroi intérieure 11d délimitant l'ouverture tubulaire 11c de cette seconde partie 11b, ces pattes étant destinées à venir en appui sur l'une 2c dite première des faces de la bielle 2, lorsque celle-ci sera montée autour de l'extrémité dite première de l'arbre. La bielle sera en appui par sa face opposée 2d sur une face d'appui 11e de la pièce 11 formant collerette autour de la partie tubulaire 11 a de la pièce.
La première partie de la pièce comporte également sur la face intérieure de la partie tubulaire, des nervures 15 destinées à coopérer avec des cannelures correspondantes 3,4,5 appartenant à l'arbre, les mêmes que celles coopérant avec la bielle, de manière à assurer le positionnement en rotation de cette pièce 11 avec l'arbre 1.
Sur la figure 5, cette paroi intérieure 11 d délimitant l'ouverture tubulaire de la seconde partie de la pièce intermédiaire comporte au niveau des pattes précitées 14, des éléments 16 formant rampe aptes à recevoir la bielle 2 lors de son montage autour de l'arbre 1, ladite paroi intérieure 11 d étant déformée légèrement, de manière à permettre le passage de cette bielle 2 de l'autre côté des pattes 14 formant clips, position dans laquelle ladite bielle sera immobilisée axialement par rapport à l'arbre, étant retenue entre ces pattes 14 et la face d'appui précitée 11e de la pièce intermédiaire 11 sur laquelle la bielle 2 sera amenée en appui lors de son montage autour de cette extrémité de l'arbre.
Dans cette position, la bielle 2 sera immobilisée axialement par rapport à l'arbre 1 par l'intermédiaire de la pièce intermédiaire 11 et radialement par coopération entre les cannelures 3,4,5 de l'arbre 1 et les nervures 6,7,8 de la bielle 2.

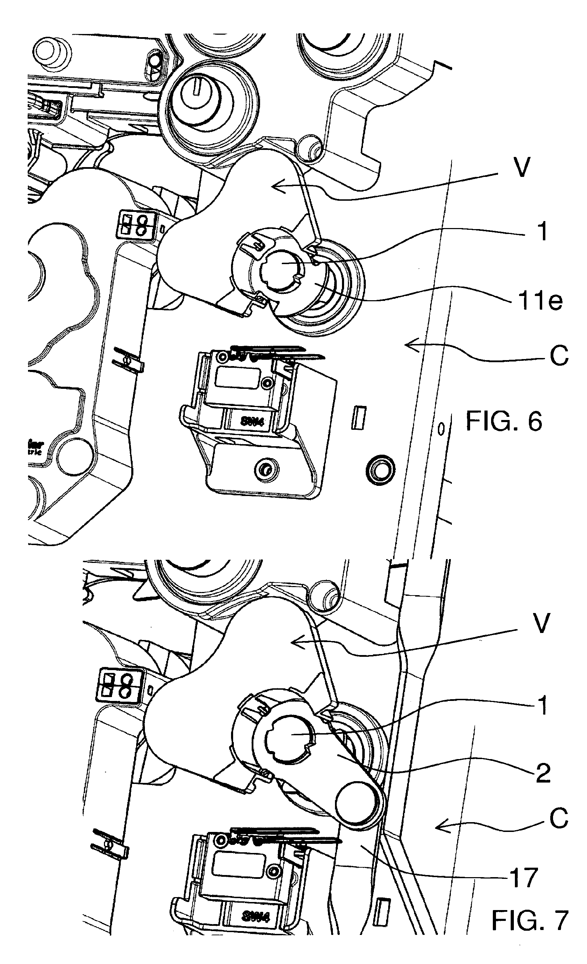

Sur les figures 6,7 et 8, le dispositif selon l'invention est mis en oeuvre dans un dispositif d'inter-verrouillage destiné à sécuriser l'accès à la boîte à câbles d'une cellule électrique C haute ou moyenne tension, ladite cellule comprenant un appareil de coupure électrique en série avec des moyens de mise à la terre des câbles, ladite cellule étant reliée en amont à un réseau d'alimentation électrique et en aval à au moins un câbles, le ou les câbles étant logé dans une boîte à câbles, ledit dispositif comportant des moyens pour autoriser l'ouverture de la porte de la boîte à câbles uniquement si la mise à la terre des câbles est réalisée, des moyens pour interdire la fermeture de l'appareil de coupure tant que la porte n'est pas présente et verrouillée, et des moyens pour autoriser la remise en ligne des moyens de mise à la terre lorsque la porte est ouverte mais interdire la fermeture de l'appareil de coupure lorsque ladite porte est ouverte.
Ce dispositif comporte un boîtier non représenté logeant un verrou et un levier de renvoi, ledit boîtier étant destiné à être fixé sur la face intérieure d'une paroi de la boîte à câbles, ledit verrou coopérant d'une part avec la porte et d'autre part, avec une tringle de verrouillage de la porte, ladite tringle comportant la bielle 2 fixée sur l'arbre de mise à la terre 1 et une bielle plate 17 , de manière que la commande de la mise à la terre des câbles entraîne le déverrouillage de la porte, ledit levier de renvoi coopérant d'une part avec la porte et d'autre part, avec une tringle de verrouillage d'un sélecteur, de manière à empêcher le déplacement du sélecteur vers une position autorisant l'ouverture ou la fermeture de l'appareil de coupure, lorsque la porte n'est pas en position fermée.
La mise en oeuvre du dispositif de positionnement axial selon l'invention va être décrite dans ce qui suit en référence aux figures 6 à 8.
Sur la figure 6, la pièce intermédiaire 11 est tout d'abord mise en place sur l'arbre 1 par montage de sa première partie 11 a autour de l'arbre 1 et encliquetage de cette partie sur l'arbre 1, grâce aux éléments d'encliquetage 12 coopérant avec la rainure circulaire 10 de l'arbre 1. Dans cette position, ladite pièce est également immobilisée en rotation par rapport à l'arbre 1 par l'intermédiaire de ses nervures 15 coopérant avec les cannelures 3,4,5 de l'arbre 1.
Puis, tel que ceci est illustré sur la figure 7, la bielle 2 équipée de la bielle plate 17 est montée autour de l'arbre 1 par l'ouverture tubulaire 11c prévue dans la seconde partie de la pièce, et la bielle est entraînée à passer d'un côté à l'autre des pattes formant clips 14 de la pièce. Dans cette position, la pièce intermédiaire 11 est solidaire de l'arbre 1, et la bielle est retenue axialement entre les pattes 14 et la surface d'appui 11 e, position également illustrée sur la figure 8. Avantageusement, cette pièce intermédiaire fait également office de voyant V et coopère avec une ouverture prévue dans la face avant de la cellule de manière à indiquer l'état du dispositif de mise à la terre.

L'invention permet donc de positionner axialement et radialement la bielle sur l'arbre secondaire du mécanisme de mise à la terre, cette bielle étant une option et pouvant donc être montée sur la cellule finie, cette manoeuvre pouvant donc être réalisée par le client.
Cette invention permet donc, de manière élargie, de réaliser une solidarisation axiale et une solidarisation radiale d'une bielle montée sur un arbre d'entraînement, en se servant d'une pièce intermédiaire, laquelle peut être une pièce multifonction coopérant avec l'arbre de manière à réaliser un arrêt axial par un système de clip.

Ce dispositif permet également d'obtenir une sécurisation du client au moment du montage, par le fait qu'il n'y a pas de risque de faire tourner l'arbre et donc que le mécanisme ne se mette en route inopinément.

Bien que l'invention s'applique avantageusement à une utilisation pour réaliser le positionnement d'une bielle par rapport à un arbre de commande de la mise à la terre dans une cellule haute ou moyenne tension, l'invention s'applique plus largement à toute bielle nécessitant d'être positionnée par rapport à son arbre d'entraînement.

On a donc réalisé selon l'invention un dispositif de positionnement d'une bielle par rapport à son arbre d'entraînement, de conception simple, ne nécessitant qu'un nombre de pièce réduit, et dont le montage est très simple et rapide (sans outil), d'où un coût de fabrication et de montage de cette pièce réduits.

En effet, une seule pièce est nécessaire, laquelle réalise en coopération avec l'arbre, le positionnement axial de la bielle, laquelle bielle est solidarisée en rotation avec l'arbre.

Le montage de ce dispositif est très simple et rapide, ne nécessitant que deux manipulations simples, à savoir le montage et l'encliquetage de la pièce intermédiaire sur l'arbre, et le montage de la bielle à l'intérieur de la pièce et sur l'arbre, ainsi que la mise en position de ladite bielle au moyen d'un encliquetage sur ladite pièce intermédiaire.

Bien entendu, l'invention n'est pas limitée au mode de réalisation décrit et illustré qui n'a été donné qu'à titre d'exemple.

C'est ainsi par exemple que d'autres formes auraient pu être envisagées pour assurer la solidarisation en rotation de l'arbre avec la pièce intermédiaire, ou de l'arbre avec la bielle, telle une forme hexagonale ou deux méplats ou toute autre forme permettant la transmission d'un couple.

Au contraire, l'invention comprend tous les équivalents techniques des moyens décrits ainsi que leurs combinaisons si celles-ci sont réalisées suivant son esprit.

## Revendications

1. Dispositif de positionnement axial d'une bielle par rapport à son arbre d'entraînement, ladite bielle comportant à l'une de ses extrémités une ouverture par laquelle ladite bielle est destinée à être montée autour d'une extrémité dite première de l'arbre, comportant une pièce intermédiaire (11) comportant une partie dite première (11a) de forme sensiblement tubulaire destinée à être montée autour de l'extrémité dite première (1a) de l'arbre (1) et comportant des moyens dits premiers (12) d'encliquetage sur ledit arbre (1) aptes à empêcher le déplacement axial de cette première partie (11a) de la pièce (11) par rapport à l'arbre (1), et une seconde partie (11b) comportant des moyens dits seconds (14) aptes à venir en appui sur une face (2c) de la bielle, après les montages successifs de la première partie (11a) de la pièce puis de la bielle (2) autour de cette première extrémité (1a) de l'arbre, puis la mise en appui de la bielle (2) sur une face (11e) de cette première partie (11a) de la pièce intermédiaire (11), de manière que ladite bielle soit retenue axialement entre les moyens d'appui précités (14) de la pièce intermédiaire (11) et la surface d'appui précitée (11 e) de ladite pièce (11), **caractérisé en ce que** ledit dispositif comporte des moyens de blocage (3,4,5 ;6,7,8) en rotation de la bielle (2) par rapport à l'arbre précité (1), et des moyens de blocage en rotation de la pièce intermédiaire (11) par rapport à l'arbre précité (1), ces moyens de blocage (3,4,5,6,7,8) en rotation de la bielle (2) par rapport à l'arbre précité (1) comportant des nervures (6,7,8) prévues sur la surface délimitant l'ouverture (9) de la bielle (2), lesdites nervures coopérant avec des cannelures (3,4,5) correspondantes prévues sur l'arbre (1).

2. Dispositif de positionnement selon la revendication 1, **caractérisé en ce que** la pièce précitée (11) est réalisée dans un matériau plastique.

3. Dispositif de positionnement selon la revendication 1 ou 2, **caractérisé en ce que** la partie tubulaire précitée (11a) comporte au moins une échancrure (13) s'étendant sensiblement parallèlement à la direction longitudinale de la partie tubulaire (11a) et destinée à faciliter le déplacement de la partie tubulaire le long de l'arbre (1) lors du montage de la pièce (11) sur ledit arbre (1).

4. Dispositif de positionnement selon la revendication 3, **caractérisé en ce que** la seconde partie (11b) de la pièce comporte une ouverture de forme sensiblement tubulaire (11c) destinée à permettre l'introduction de l' extrémité dite première (2a) de la bielle (2), ladite ouverture (11c) étant délimitée par une paroi (11d) comportant plusieurs pattes (14) s'étendant en direction du centre de l'ouverture, lesdites pattes étant aptes à être déformées élastiquement de manière à permettre le passage de la bielle (2) d'un côté à l'autre desdites pattes (14) lors de son montage sur l'extrémité (1a) de l'arbre, jusqu'à la mise en appui de la bielle (2) sur une surface d'appui (11 e) de la première partie (11a) de la pièce intermédiaire, position dans laquelle ladite bielle est retenue entre les pattes formant clips précités de la pièce intermédiaire et la surface d'appui (11e) précitée de ladite pièce.

5. Dispositif de positionnement selon la revendication 4, **caractérisé en ce que** les pattes (14) sont au nombre de trois et forment trois clips.

6. Dispositif de positionnement selon l'une quelconque des revendications précédentes, **caractérisé en ce que** ces moyens de blocage en rotation de la pièce intermédiaire (11) par rapport à l'arbre précité (1), comportent des nervures (15) prévues sur la surface intérieure de la partie tubulaire de la première partie (11a) de la pièce intermédiaire, lesdites nervures coopérant avec des cannelures (3,4,5) correspondantes prévues sur l'arbre (1).

7. Dispositif de positionnement selon l'une quelconque des revendications précédentes, **caractérisé en ce que** les moyens d'encliquetage précités (12) comportent des crochets prévus sur la première partie (11a) de la pièce intermédiaire (11) coopérant avec une rainure circulaire (10) prévue sur l'arbre (1).

8. Dispositif de positionnement selon l'une quelconque des revendications 4 à 7, **caractérisé en ce que** la paroi (11d) délimitant l'ouverture tubulaire (11c) de la seconde partie (11b) de la pièce comporte au niveau des pattes (14), des parties formant rampe (16) aptes à faciliter le passage de la bielle (2) d'un côté à l'autre des pattes formant cliquets (14).

9. Dispositif d'inter-verrouillage destiné à sécuriser l'accès à la boîte à câbles d'une cellule électrique haute ou moyenne tension C, ladite cellule comprenant un appareil de coupure électrique en série avec des moyens de mise à la terre des câbles commandés par un arbre de mise à la terre, ladite cellule étant reliée en amont à un réseau d'alimentation électrique et en aval à au moins un câbles, le ou les câbles étant logés dans une boîte à câbles fermée par une porte, ledit dispositif comportant des moyens pour autoriser l'ouverture de la porte de la boîte à câbles uniquement si la mise à la terre des câbles est réalisée, et des moyens pour autoriser la remise en ligne des moyens de mise à la terre lorsque la porte est ouverte, mais interdire la fermeture de l'appareil de coupure lorsque ladite porte est ouverte, ledit dispositif comportant un boîtier logeant un verrou, ledit verrou coopérant d'une part avec la porte et d'autre part, avec une tringle de verrouillage comportant une bielle (2) montée autour de l'arbre (1) de mise à la terre, **caractérisé en ce que** la bielle précitée (2) est positionnée par rapport à l'arbre précité (1) au moyen d'un dispositif de positionnement selon l'une quelconque des revendications 1 à 8.

10. Dispositif d'inter-verrouillage selon la revendication 9, **caractérisé en ce que** la pièce intermédiaire (11) du dispositif de positionnement forme également un voyant mécanique V coopérant avec une ouverture prévue dans la face avant de la cellule de manière à donner la position de l'arbre de mise à la terre.

11. Dispositif d'inter-verrouillage selon la revendication 10, **caractérisé en ce que** la pièce intermédiaire (11) du dispositif de positionnement a également pour fonction d'actionner des micro-rupteurs.

## Patentansprüche

1. Anordnung zur axialen Montage eines Hebels auf dessen Antriebswelle, welcher Hebel an einem seiner Enden eine Öffnung aufweist, die dazu dient, den Hebel um ein sogenanntes erstes Ende der Welle zu führen, **dadurch gekennzeichnet, dass** die Anordnung ein Zwischenstück (11) mit einem annähernd zylinderförmigen, sogenannten ersten Abschnitt (11a), der dazu dient, um das sogenannte erste Ende (1a) der Welle (1) geführt zu werden, und erste, sogenannte Schnappmittel (12) zum Aufschnappen auf der Welle (1) umfasst, welche Schnappmittel dazu ausgelegt sind, eine Axialverschiebung des genannten ersten Abschnitts (11a) des Zwischenstücks (11) in Bezug zur Welle (1) zu verhindern, sowie einem zweiten Abschnitt (11b) mit zweiten, sogenannten Abstützmitteln (14) umfasst, die dazu dienen, sich auf einer Fläche (2c) des Hebels abzustützen, nachdem nacheinander der erste Abschnitt (11a) des Zwischenstücks und der Hebel (2) um das genannte erste Ende (1 a) der Welle geführt und anschließend der Hebel (2) in Auflage auf einer Stützfläche (11e) des genannten ersten Abschnitts (11a) des Zwischenstücks (11) gebracht wurden, derart, dass der genannte Hebel zwischen den genannten Abstützmitteln (14) des Zwischenstücks (11) und der genannten Stützfläche (11e) des genannten Zwischenstücks (11) gehalten wird, wobei die genannte Anordnung Blockiermittel (3, 4, 5; 6, 7, 8) zum drehwirksamen Blockieren des Hebels (2) in Bezug zur genannten Welle (1), sowie Blockiermittel zum drehwirksamen Blockieren des Zwischenstücks (11) in Bezug zur genannten Welle (1) umfasst, diese Blockiermittel (3, 4, 5; 6, 7, 8) zum drehwirksamen Blockieren des Hebels (2) in Bezug zur genannten Welle (1) mit Rippen (6,7,8) auf der obenfläche (9) der Offnung (9) des hebels (2), diese Rippen (6,7,8) zusammenwirkend mit an der Welle (1) entsprechenden Hohl-kehlen (3,4,5).

2. Montageanordnung nach Anspruch 1, **dadurch gekennzeichnet, dass** das genannte Zwischenstück (11) aus einem Kunststoff besteht.

3. Montageanordnung nach Anspruch 1 oder 2, **dadurch gekennzeichnet, dass** in dem genannten zylinderförmigen Abschnitt (11a) mindestens ein Ausschnitt (13) ausgebildet ist, der annähernd parallel zur Längsachse des zylinderförmigen Abschnitts (11a) verläuft und dazu dient, bei der Montage des Zwischenstücks (11) auf der genannten Welle (1) eine Längsverschiebung des zylinderförmigen Abschnitts auf der Welle (1) zu erleichtern.

4. Montageanordnung nach Anspruch 3, **dadurch gekennzeichnet, dass** der zweite Abschnitt (11 b) des Zwischenstücks eine annähernd zylinderförmige Öffnung (11 c) aufweist, die dazu dient, die Einführung des sogenannten ersten Endes (2a) des Hebels (2) zu ermöglichen, welche Öffnung (11c) durch eine Wand (11d) mit mehreren, zur Mitte der Öffnung gerichteten Nasen (14) begrenzt wird, die dazu ausgelegt sind, elastisch verformt zu werden und so bei der Montage des Hebels auf dem Ende (1a) der Welle die Durchführung des Hebels (2) von einer Seite der Nasen auf die andere Seite der genannten Nasen (14) zu erlauben, bis der Hebel (2) in Auflage auf eine Stützfläche (11e) des ersten Abschnitts (11a) des Zwischenstücks gelangt, in welcher Stellung der Hebel zwischen den genannten, als Clips ausgebildeten Nasen des Zwischenstücks und der genannten Stützfläche (11e) des genannten Zwischenstücks gehalten wird.

5. Montageanordnung nach Anspruch 4, **dadurch gekennzeichnet, dass** die Nasen (14) in dreifacher Anzahl vorhanden und als drei Clips ausgebildet sind.

6. Montageanordnung nach irgendeinem der vorhergehenden Ansprüche, **dadurch gekennzeichnet, dass** die genannten Blockiermittel zum drehwirksamen Blockieren des Zwischenstücks (11) in Bezug zur genannten Welle (1) an der Innenfläche des zylinderförmigen Abschnitts des ersten Abschnitts (11a) des Zwischenstücks ausgebildete Vorsprünge (15) umfassen, welche Vorsprünge mit in der Welle (1) ausgebildeten zugehörigen Hohl-kehlen (3, 4, 5) zusammenwirken.

7. Montageanordnung nach irgendeinem der vorhergehenden Ansprüche, **dadurch gekennzeichnet, dass** die genannten Schnappmittel (12) Haken umfassen, die am ersten Abschnitt (11a) des Zwischenstücks (11) ausgebildet sind und mit einer, in der Welle (1) ausgebildeten umlaufenden Nut (10) zusammenwirken.

8. Montageanordnung nach irgendeinem der Ansprüche 4 bis 7, **dadurch gekennzeichnet, dass** die Wand (11d), welche die zylinderförmige Öffnung (11c) des zweiten Abschnitts (11b) des Zwischenstücks begrenzt, im Bereich der Nasen (14) als Schrägen ausgebildete Abschnitte (16) umfasst, die dazu dienen, die Durchführung des Hebels (2) von einer Seite auf die andere Seite der Schnappelemente bildenden Nasen (14) zu erleichtern.

9. Anordnung zur gegenseitigen Verriegelung zum Zwecke der Zugangssicherung eines Kabelraums einer elektrischen Hochspannungs- oder Mittelspannnungs-Schaltzelle, welche Schaltzelle ein Schaltgerät umfasst, das mit durch eine Erdungswelle angesteuerten Erdungsmitteln zur Erdung der Kabel in Reihe geschaltet ist, und einspeiseseitig mit einem Stromversorgungsnetz sowie abgangsseitig mit mindestens einem, in einem durch eine Tür verschlossenen Kabelraum angeordneten Kabel verbunden ist, wobei die genannte Anordnung Mittel, die dazu dienen, die Öffnung der Tür des Kabelraums nur nach erfolgter Erdung der Kabel zuzulassen, sowie Mittel umfasst, die dazu dienen, bei geöffneter Tür die Wiederaufschaltung der Erdungsmittel zuzulassen, das Einschalten des Schaltgeräts im geöffneten Zustand der genannten Tür jedoch zu verhindern, wobei genannte Anordnung ein Gehäuse mit einer Sperre umfasst, welche Sperre einerseits mit der Tür und andererseits mit einem Verriegelungsgestänge zusammenwirkt, das einen, um die Erdungswelle (1) geführten Hebel (2) umfasst, **dadurch gekennzeichnet, dass** der genannte Hebel (2) mithilfe einer Montageanordnung nach irgendeinem der Ansprüche 1 bis 8 auf der genannten Welle (1) montiert ist.

10. Anordnung zur gegenseitigen Verriegelung nach Anspruch 9, **dadurch gekennzeichnet, dass** das Zwischenstück (11) der Montageanordnung zugleich einen mechanischen Sichtmelder V bildet, der mit einer in der Frontseite der Schaltzelle ausgebildeten Öffnung zusammenwirkt, um so die Stellung der Erdungswelle anzuzeigen.

11. Anordnung zur gegenseitigen Verriegelung nach Anspruch 10, **dadurch gekennzeichnet, dass** das Zwischenstück (11) der Montageanordnung außerdem zur Betätigung von Mikroschaltern dient.

## Claims

1. Device for the axial positioning of a link arm with respect to its drive shaft, said link arm comprising, at one of its ends, an opening via which said link arm is designed to be mounted about an end, termed the first end, of the shaft, which first end comprises an intermediate part (11) comprising a portion, termed the first portion (11 a), which is substantially tubular and is designed to be mounted about the first end (1 a) of the shaft (1) and comprises means, termed first means (12) for interlocking onto said shaft (1), which means are able to prevent this first portion (11 a) of the part (11) from moving axially with respect to the shaft (1), and a second portion (11 b) comprising means, termed second means (14), which are able to bear against a face (2c) of the link arm once the first portion (11 a) of the part and then the link arm (2) have successively been mounted about this first end (1 a) of the shaft, then the link arm (2) being made to bear on a face (11e) of this first portion (11a) of the intermediate part (11), such that said link arm is held axially between the abovementioned bearing means (14) of the intermediate part (11) and the abovementioned bearing surface (11e) of said part (11), **characterized in that** said device comprises means (3, 4, 5; 6, 7, 8) for preventing the link arm (2) from rotating with respect to the abovementioned shaft (1) and means for preventing the intermediate part (11) from rotating with respect to the abovementioned shaft (1), wherein these means (3, 4, 5, 6, 7, 8) for preventing the link arm (2) from rotating with respect to the abovementioned shaft (1) comprise ribs (6, 7, 8) provided on the surface delimiting the opening (9) of the link arm (2), wherein said ribs engage with corresponding splines (3, 4, 5) provided on the shaft (1).

2. Positioning device according to Claim 1, **characterized in that** the abovementioned part (11) is made of a plastic material.

3. Positioning device according to Claim 1 or 2, **characterized in that** the abovementioned tubular portion (11a) comprises at least one notch (13) which extends substantially parallel to the longitudinal direction of the tubular portion (11 a) and is designed to make it easier for the tubular portion to move along the shaft (1) during mounting of the part (11) on said shaft (1).

4. Positioning device according to Claim 3, **characterized in that** the second portion (11b) of the part comprises a substantially tubular opening (11c) into which the end, termed first end (2a), of the link arm (2) is intended to be introduced, said opening (11c) being delimited by a wall (11d) comprising multiple lugs (14) which extend toward the centre of the opening, said lugs being able to be deformed elastically so as to allow the link arm (2) to pass from one side of said lugs (14) to the other when it is mounted onto the end (1 a) of the shaft, until the link arm (2) is made to bear against a bearing surface (11e) of the first portion (11a) of the intermediate part, in which position said link arm is held between the lugs, forming the abovementioned clips, of the intermediate part and the abovementioned bearing surface (11 e) of said part.

5. Positioning device according to Claim 4, **characterized in that** the lugs (14) are three in number and form three clips.

6. Positioning device according to any one of the preceding claims, **characterized in that** these means for preventing the intermediate part (11) from rotating with respect to the abovementioned shaft (1) comprise ribs (15) provided on the inner surface of the tubular portion of the first portion (11a) of the intermediate part, wherein said ribs engage with corresponding splines (3, 4, 5) provided on the shaft (1).

7. Positioning device according to any one of the preceding claims, **characterized in that** the abovementioned interlocking means (12) comprise hooks, provided on the first portion (11a) of the intermediate part (11), which engage with a circular groove (10) provided on the shaft (1).

8. Positioning device according to any one of Claims 4 to 7, **characterized in that** the wall (11 d) delimiting the tubular opening (11 c) of the second portion (11 b) of the part comprises, on the lugs (14), portions which form a ramp (16) able to facilitate the passage of the link arm (2) from one side to the other of the lugs forming catches (14).

9. Interlock device designed to secure access to the cable box of a high- or medium-voltage electrical cell C, said cell comprising an electrical switching apparatus in series with means for grounding the cables, which means are controlled by a grounding shaft, said cell being connected, upstream, to an electrical power supply network and, downstream, to at least one cable, the cable or cables being housed in a cable box which is closed by a door, said device comprising means for authorizing the opening of the door of the cable box only if the cables are grounded, and means for allowing the grounding means to be brought back on line when the door is open but preventing the switching apparatus from being closed when said door is open, said device comprising a casing which houses a lock, wherein said lock engages on one hand with the door and on the other hand with a locking rod comprising a link arm (2) mounted about the grounding shaft (1), **characterized in that** the abovementioned link arm (2) is positioned with respect to the abovementioned shaft (1) by means of a positioning device according to any one of Claims 1 to 8.

10. Interlock device according to Claim 9, **characterized in that** the intermediate part (11) of the positioning device also forms a mechanical indicator V which engages with an opening provided in the front face of the cell so as to indicate the position of the grounding shaft.

11. Interlock device according to Claim 10, **characterized in that** the intermediate part (11) of the positioning device also serves to actuate micro-switches.
